# EUROPEAN PATENT APPLICATION

(11) **EP 4 303 615 A1**
(43) Date of publication of application: **10.01.2024**
(21) Application number: 22183042.5
(22) Date of filing: 05.07.2022
(51) Int. Cl.: G01S 7/484, G01S 7/486, G01S 7/489, G01S 17/10, G01S 17/89, G01S 17/931

(54) **LIDAR SYSTEM AND METHOD TO OPERATE**

(71) Applicant: Veoneer Sweden AB, 447 37 Vårgårda (SE)
(72) Inventor: HALLSTIG, Emil, 44737 Vårgårda (SE)
(74) Representative: Müller Verweyen

(57) **Abstract**

The invention relates to a lidar system (10) comprising at least one laser source (11) configured to emit laser pulses (15) and to direct said laser pulses (15) in a field of view (16), at least one detector (13) configured to detect reflections (17) of said laser pulses (15), and a control unit (14) configured to perform time-of-flight measurements on said laser pulses (15) and the detected reflections (17). The control unit (14) is configured to control the power of the laser pulses (15) of the at least one laser source (11) and/or the sensitivity of the at least one detector (13), wherein the control unit (14) is configured to control the at least one laser source (11) and/or the at least one detector (13) to perform measurements with at least two different operating modes, wherein in a first operating mode the at least one detector (13) has a predefined sensitivity and/or the at least one laser source (11) is set to a predefined power of the laser pulses (15), wherein in a second operating mode the at least one detector (13) has a higher sensitivity and/or the at least one laser source (11) is set to higher power of the laser pulses (15) than in the first operating mode, wherein said measurements with different operating modes are performed in a predefined time period.

## Description

The invention relates to a lidar system comprising at least one laser source configured to emit laser pulses and to direct said laser pulses in a field of view, at least one detector configured to detect reflections of said laser pulses, and a control unit configured to perform time-of-flight measurements on said laser pulses and the detected reflections. The invention further relates to a corresponding method to operate such a lidar system.

Lidar systems for autonomous driving (AD) and advanced driver assistance system (ADAS) are well known in the prior art and are able to determine ranges or distances of objects like vehicles, pedestrians or obstacles in the scene around and in particular in front of an ego-vehicle. Generally, the dynamic ranges of such lidar system are limited which may lead to a bad signal quality and an insufficient spatial resolution at different distances. A high dynamic range means that the lidar system is able to handle low and high return signals.

In order to improve the dynamic range a method called auto gain is a known way to adjust the range performance for specific objects and distances. Lidar systems incorporating auto gain adjust the detector gain based on an adjacent measurement of a neighboring point or a preceding measurement of a previous frame. Such lidar system have some drawbacks especially with respect to fast objects and fast changes in the contrast.

The object of the invention is to increase the dynamic range of the lidar system with maintained good spatial resolution at different distances.

The invention solves the problem with the features of the independent claims. Further preferred embodiments of the invention can be found in the dependent claims and the associated descriptions and drawings.

A lidar system is proposed that comprises at least one laser source configured to emit laser pulses and to direct said laser pulses in a field of view, at least one detector configured to detect reflections of said laser pulses, and a control unit configured to perform time-of-flight measurements on said laser pulses and the detected reflections. It is proposed that the control unit is configured to control the power of the laser pulses of the at least one laser source and/or the sensitivity of the at least one detector, wherein the control unit is configured to control the at least one laser source and/or the at least one detector to perform measurements with at least two different operating modes. In a first operating mode the at least one detector has a predefined sensitivity and/or the at least one laser source is set to a predefined power of the laser pulses, wherein in a second operating mode the at least one detector has a higher sensitivity and/or the at the least one laser source is set to higher power of the laser pulses than in the first operating mode, wherein said measurements with different operating modes are performed in a predefined time period.

The proposed lidar system has an advantageously increased dynamic range. Therefore, objects with low reflectivity or reflectance far away can be detected while objects with a high reflectivity or reflectance close to the lidar system will not saturate the detector, avoiding bad range readings. Moreover, in these cases it is possible to estimate the reflectivity or reflectance of an object.

The proposed lidar system allows for the detection of the same objects or targets with two operating modes, wherein the resulting distances of the time-of-flight measurements and the amplitudes of the detected reflections can be compared allowing for an improved data quality.

The proposed two operating modes are preferably predefined or set and not adjusted dynamically. This is in contrast to known lidar systems incorporating auto gain which are relying on a single operating mode which adapts the gain of the detector in dependance of the detected signal strength, for example. The proposed system incorporating at least two operating modes has an improved performance with regard to the detection of fast-moving objects and fast changes between dark and bright objects. The proposed lidar system enables a higher stability of the measurements and a more predictable system behavior which is beneficial for autonomous driving and advanced driver assistance systems.

The sensitivity of the at least one detector is preferably controlled by adjusting the gain of the detector. Additionally or alternatively, the sensitivity of the at least one detector is preferably controlled by bundling several sensor elements or detector elements.

The power of the laser pulses can refer to the peak power of the laser pulses, and/or to the mean pulse power, and/or to the pulse length of the laser pulses, and/or the power of the laser pulses can be controlled by the number of pulses, in particular per measurement point. Accordingly, the power of the laser pulses may also be referred as total laser power of the laser pulses.

In a preferred embodiment, in a first operating mode the at least one detector has a predefined sensitivity and the at least one laser source is set to a predefined power of the laser pulses.

In an advantageous embodiment, the lidar system comprises an optical device which optical device is configured to direct the laser pulses of one or more laser sources in the field of view.

The optical device is preferably a scanner that is adapted to direct the laser pulses in the field of view, which is in particular advantageous when the lidar system comprises a single laser source. The scanner is preferably adapted to direct light in a two-dimensional field of view. Further on, said optical device, in particular the optical device being a scanner, is beneficial for a lidar system comprising a single detector, wherein the lidar system is adapted to direct the reflections to the detector. Thereby, the lidar system comprises preferably a coaxial configuration. In other advantageous embodiments, the lidar system may comprise a biaxial configuration.

In an alternative embodiment, the optical device is preferably a lens system adapted to direct the laser pulses in the field of view. Such lens systems are well suited for so called flash lidar systems, in particular solid state flash laser systems. The at least one laser source is preferably a solid-state flash laser whose laser pulses are directed by the lens system in the field of view to create the needed spatial distribution of the laser pulses in the field of view in order to perform the time-of-flight measurement.

It is further proposed that the lidar system comprises a one-dimensional or two-dimensional array of laser sources, in particular solid-state laser sources. It is further proposed that the lidar system comprises a one-dimensional or two-dimensional array of detectors. In preferred embodiments, said arrays of laser sources and detectors are arranged in pairs. Advantageously, said one-dimensional or two-dimensional arrays of laser sources and/or detectors allow to perform lidar measurements or time-of-flight measurements in the field of view without any moving parts. Herein, coaxial, biaxial or multiaxial configuration are possible.

In a possible embodiment, the control unit is configured to perform a third or intermediate operating mode, wherein in the third operating mode the at least one detector has a higher sensitivity and/or the at least one laser source is set to higher power of the laser pulses than in the first operating mode and the at least one detector has a lower sensitivity and/or the at least one laser source is set to lower power of the laser pulses than in the second operating mode.

In an advantageous embodiment, the given time period is shorter than 1 s, preferably shorter than 0.5 s, further preferably shorter than 0.2 s, even further preferably shorter than 0.1 s.

The first and second operating modes are utilized in quick succession or in an alternating pattern on the same scene, so that both operating modes are preferably active in every time frame captured or in a given time period. The complete field of view is preferably at least once scanned with at least one operating mode in said given time period. In order to receive at least two reflections with the two different operating modes from the same target and to be able to compare said measurements the time period is preferably limited. Usually, the objects or targets are much larger than the laser point on the object hence even small overlaps or even adjacent points can be used to compare the respective measurements.

Preferably, the first operating mode is adapted to detect highly reflective objects at a minimum distance. Said operating mode enables a good detection of high reflectivity objects or targets close to the lidar system. Thereby, low reflectivity objects or objects at a greater distance will give a very low signal-to-noise ratio or may even remain undetected in the first operating mode.

In a preferred embodiment the first operating mode is adapted to detect highly reflective objects at a minimum distance at or above a saturation threshold of the detector. A given laser and detector of the lidar system can therefore be maxed out with the respect to the dynamic range at one end of the range.

It is further proposed that the second operating mode is adapted to detect low reflective objects at a maximum distance. The second operating mode has therefore the maximum sensitivity which the lidar system allows, e.g., the components of the lidar system allow. Therefore, objects at a closer range and in particular white objects may lead to a saturation of the at least one detector.

In particular the dynamic range of the lidar system can be increased significantly with the first operating mode being adapted to detect highly reflective objects at a minimum distance. Said improvement of the dynamic range does not rely on improvements of the optical components of the lidar system.

Preferably, the second operating mode is adapted to detect low reflective objects at a maximum distance at a detection limit of the at least one detector. Accordingly, the lidar system can be maxed out with respect to the dynamic range at the other end of the range.

In a preferred embodiment, the highly reflective object is a white object. A white object can be a white car, reflective car license plate, road sign or road markings, for example. Preferably, the highly reflective object has a reflectance R higher than 90%.

In a preferred embodiment, the low reflective object is a dark object. A dark object can be a black car or black metallic car, road surface, black tire and inclined surfaces, for example. Preferably, the low reflective object has reflectance R lower than 20%, further preferably lower than 10%, even further preferably lower than 5%.

In a further development, it is proposed that the control unit is configured to perform measurements at at least one vector in the field of view with at least two different operating modes, preferably the first operating mode and the second operating mode. Scanning the same vector with both operating modes allows to achieve a good signal and detecting of an object in this vector of the field of view independent of its reflectance or distance as at least one operating mode of the lidar system will be suitable for the properties of the target.

In an advantageous embodiment, the control unit is configured to perform measurements of the complete field of view with the first operating mode and with the second operating mode. The field of view can be covered completely with the improved dynamic range of the lidar system.

In alternative embodiments, the operating modes may be selected for different parts of the field of view. Accordingly, the operating modes can have different field of views. Depending on the mounting position of the lidar system, sections of the field of view can be pointing to the ground with a high certainty, where the second operating mode is not necessary, for example.

In a further development, it is proposed that the control unit is configured to perform measurements with the second operating mode at a higher repetition rate than with the first operating mode. This can reduce the power consumption or the needed processing power.

In a preferred embodiment, the control unit is configured to perform measurements with the second operating mode with a higher spatial resolution than with the first operating mode. Since the first operating mode is optimized for detecting close objects or objects in the near range, the spatial resolution of time-of-flight measurements may be reduced without a significant loss of data quality.

It is further proposed that the lidar system is a flash system, in particular a biaxial flash system. Preferably, the resolution of the measurements in a certain area in the field of view can be changed by modifying how many pixels are bundled in a readout to get one single range point with improved sensitivity or accuracy. For example, a fixed two-dimensional array of detectors or a part thereof could perform measurements in a first operating mode, e.g., low sensitivity or gain (short range) measurements, with low resolution and measurement in a second operating mode, e.g., high sensitivity or gain measurements (long range), with high resolution. The readout region of the array of detectors, which detectors can be single-photon avalanche diodes (SPAD), for example, can be adapted to vary the field of view for low sensitivity vs high sensitivity. Thus, a large field of view can be utilized in the first operating mode for short range and in the second operating mode a high-resolution region at center of field of view can be utilized. For the smaller high-resolution region more pulses could be sent out to improve the sensitivity or accuracy.

In order to solve the task of the invention a method to operate a lidar system is proposed, wherein the lidar system comprises at least one laser source emitting laser pulses and directing said laser pulses in a field of view, at least one detector detecting reflections of said laser pulses, and a control unit performing time-of-flight measurements on said laser pulses and the detected reflections. It is proposed that the control unit controls the power of the laser pulses of the at least one laser source and/or the sensitivity of the at least one detector, wherein the control unit controls the at least one laser source and/or the at least one detector to perform measurements with at least two different operating modes, wherein in a first operating mode the at least one detector has a predefined sensitivity and/or the at least one laser source is set to a predefined power of the laser pulses, wherein in a second operating mode the at least one detector has a higher sensitivity and/or the at least one laser source is set to higher power of the laser pulses than in the first operating mode, wherein said measurements with different operating modes are performed in a predefined time period.

In an advantageous embodiment, the lidar system comprises an optical device which optical device is configured to direct the laser pulses of one or more laser sources, for example a solid-state flash laser, in the field of view. The optical device is preferably a scanner that directs the laser pulses of one or more laser sources, for example a solid-state laser, in the field of view.

In a further development, it is proposed that the lidar system generates at least two different point clouds corresponding to the at least two different operating modes. These two different points clouds may be transferred to a processing unit of a vehicle on which the lidar system is mounted. Each point represents the distance of the time-of-flight measurement for a given direction. In general, each of the point clouds may have several detected reflections so that the total number of generated points has a respective higher number.

It is further proposed that the lidar system is configured to generate a merged point cloud, which is merged from said at least two different point clouds. The merged point cloud can additionally or alternatively be transferred to a processing unit of a vehicle on which the lidar system is mounted. Preferably, the merge of the data points of a common section in the field of view is performed as close in time as possible and as close as possible with respect to the direction in order to enhance data quality of the merged point cloud.

In an advantageous embodiment, the lidar system is operated so that when the same object is detected in the first operating mode and the second operating mode and the time intervals of the laser pulses in the different operating modes and the time intervals of the received signals at the detector are in accordance, a confidence value for a respective data point is set higher. Such a confidence value can be utilized in further steps in an AD or ADAS system in a vehicle which uses said point cloud.

It is further proposed that when an object is detected in the first operating mode and in the second operating mode and the at least one detector does not saturate in all the operating modes, then the ratio is calculated by the control unit.

In the following the invention shall be illustrated on the basis of preferred embodiments with reference to the accompanying drawings, therein shows:
- Fig. 1: a schematic illustration of a lidar system;
- Fig. 2: a schematic illustration of another lidar system;
- Fig. 3: an example of the signal intensity over time of the lidar system in a second operating mode;
- Fig. 4: an example of the signal intensity over of the lidar system in a first operating mode; and
- Fig. 5 to 9: schematics of the utilization of different operating modes in the field of view.

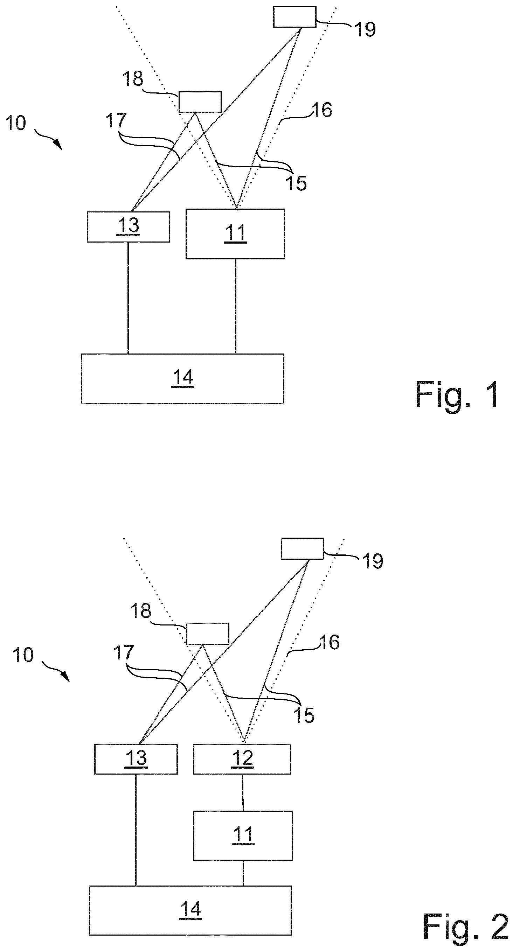

Figure 1 shows a schematic illustration of a lidar system 10, which comprises at least one laser source 11. Multiple laser sources 11 can be arranged in an array of laser sources, for example. Said at least one laser source 11 emits laser pulses 15 which are directed in the field of view 16 in order to create a spatial distribution so that the field of view 16 can be covered. The lidar system 10 further comprises at least one detector 13 that detects the reflections 17 of the laser pulses 15 from objects 18, 19 in the field of view 16 and a control unit 14. The at least one detector 13 can be a single detector 13 or an array of detectors 13. The control unit 14 is adapted to control the at least one laser source 11 and the at least one detector 13. Time-of-flight measurements are performed and thereby data points are generated with a range of a scanned vector in the field of view 16.

The lidar system 10 is operating in two different operating modes, wherein in the first operating mode the at least one detector 13 can be controlled to a low gain by the control unit 14, so that the at least one detector 13 has a lower sensitivity. The emitted laser power, controlled by either peak power, pulse length or number of pulses or a combination of those of the at least one laser source 11 can be also controlled to be low by the control unit 14 in the first operating mode. In the second operating mode the gain of the at least one detector 13 and thus its sensitivity is controlled to be high by the control unit 14, wherein the laser power of the at least one laser source 11 can be controlled to be high, for example by increasing either peak power, pulse length or number of pulses or a combination of those.

Both operating modes are used in a predefined time period, so that objects in the field of view are captured with the first and the second operating mode in a certain timeframe.

In Figure 2 another schematic illustration of a lidar system 10 is shown, which comprises a laser source 11 and an optical device 12. In a preferred embodiment, the optical device 12 is a lens system that enables a spatial distribution of a laser flash of the laser source 11 in the field of view 16 and thus directing the laser pulses 15 in the field of view 16 simultaneously. In this case, the at least one detector 13 is preferably an array of detectors 13. In another preferred embodiment, the laser source 12 emits laser pulses 15 which are directed in the field of view 16 by the optical device 12, wherein the optical device is preferably a scanner. Thus, laser pulses 15 are directed in the field of view 16 in a serial manner. The lidar system 10 further comprises a detector 13 that detects the reflections 17 of the laser pulses 15 from objects 18 in the field of view 16 and a control unit 14. The detector 13 and the laser source 11 can be arranged biaxial or coaxial with respect to the optical path of the laser pulses 15 and the reflections 17. In Figure 2 a biaxial configuration of a lidar system 10 is shown. In another advantageous embodiment, the lidar system 10 has a coaxial arrangement, wherein the detector 13 would use the same optical device 12 as the laser source 11 to cover the field of view 16. The control unit 14 is adapted to control the laser source 11, the optical device 12, which is a scanner in this advantageous embodiment, and the detector 13. Time-of-flight measurements are performed and thereby data points are generated with a range at a scanned vector in the field of view 16.

The laser source 11 is controlled by the control unit 14 which emits laser pulses 15. The laser pulses 15 are directed, in particular by the optical device 12, into a direction in the field of view 16.

As illustrated in Figure 1 and 2, the objects 18, 19 in the field of view 16 reflect laser pulses 15 which were directed to a respective vector in the field of view. The object 18 is schematically shown in the near range of the lidar system 10, for example 2 m range, wherein the object 19 is shown in a larger distance to the lidar system 10.

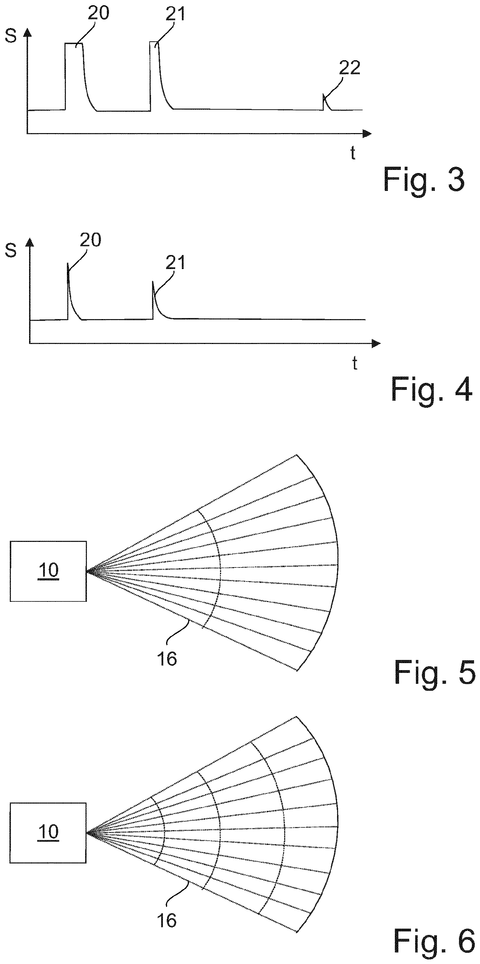

The first operating mode and the second operating mode are illustrated in the diagrams of Figures 3 and 4. Figure 3 shows the intensity S of a signal received by the detector 13 over time t in a second operating mode. Figure 4 shows the intensity of a signal received by the detector 13 over time in a first operating mode

There are three signal peaks 20, 21, 22 in Figure 3, which are in accordance with the exemplary objects 18, 19 of Figure 1 and 2. The first peak 20 is a so called zero peak caused by light going directly from the laser source 11 to the detector 13, which occurs typically in coaxial lidar systems. The zero pulse also makes the lidar blind for some time if the laser power is high and the detector is sensitive when sending out the laser pulse. As illustrated in Figure 3, the first peak 20 saturates the detector 13 and the intensity S of the signal reaches the maximum of the detector 13.

The second peak 21 is the reflection of a laser pulse 15 from the object 18, which is in close proximity of the lidar system 10. The object 18 is in this example a white object 18 with a high reflectance, for example, a white car. Due to the high gain of the detector 13, the high laser power of the laser source 11 of the second operating mode and the short distance to the object 18, which may have a high reflectance in this example, the received reflection 17 leads to a high intensity S which reaches the saturation of the detector. The saturation of the detector 13 deteriorates the signal quality for the close and bright object 18 so that the time-of-flight measurement results in a data point with high uncertainty and causes an error in the estimated reflectivity of object 18.

The third peak 22 in Figure 3 corresponds the object 19 in Figure 1 and 2 which is situated in the far range of the lidar system 10. The object 19 may also be black and have a low reflectance. The greater distance reduces the detectable intensity of the reflection 17 of the laser pulse 15. Moreover, the low reflectance further reduces the detectable intensity of the reflection 17 from the object 19. Nonetheless, in the second operating mode of the lidar system 10 with a high gain of the detector 13 and high laser power of the laser source 11 the dark object 19 can be detected and ranged at a maximum distance to the lidar system 10. Accordingly, the lidar system 10 performs well in the far range and even with very dark objects 19, while closer and in particular brighter objects 18 may be detected and ranged with low data quality in the second operating mode.

Since the lidar system 10 performs measurements with the first operating mode and the second operating mode, closer and brighter objects 18 can be detected with the first operating mode of the lidar system, wherein the first operating mode and the second operating mode are active in quick succession, preferably in the same time frame. Figure 4 illustrates the intensity S of a signal received by the detector 13 over time t in a first operating mode. Here, only two peaks 20, 21 are present, wherein the first peak 20 is the zero peak and the second peak 21 is the detected reflection of the bright and close object 18. The second peak 21 in Figure 4 respectively in the first operating mode does not reach the saturation limit of the detector 13 due to lower gain settings for the detector and/or lower laser power of the laser source 11. Therefore, the time-of-flight measurement of the distance to the bright and close object 18 is more precise than the measurement with the second operating mode. The third peak 22 relating to the dark object 19 far away is below the detection limit of the first operating mode.

Preferably, the second operating mode is set to detect dark objects at the maximum distance, where an appropriate signal-to-noise ratio can still be achieved. The first operating mode is set to detect white objects 18 with a reflectance of R=100% at minimum distance, where the signal of the reflection saturates the detector 13. Accordingly, it can be ensured that bright or white targets can be detected from minimum to maximum distance or range.

As two different operating modes, the first operating mode and the second operating mode, are active, two point clouds are generated virtually simultaneously by the lidar system 10, resulting in a very high overall dynamic range of the lidar system 10.

Figure 5 illustrates the time-of-flight measurements in the field of view 16 of the lidar system 10. In this advantageous embodiment the first operating mode generates high quality data points for objects 18, 19 with a range that is smaller than the exemplary threshold. Said threshold can be approximately half the way of the maximum distance, for example, which is illustrated by the dashed curve in Figure 5. In possible embodiments, the threshold is between 50 m to 150 m, for example, about 100 m. The second operating mode generates data points with a high data quality beyond said threshold up to the maximum operating distance of the lidar system 10. In the embodiment of Figure 5 the two operating modes are active equally often over the complete field of view as illustrated by the sectors.

In general, the point clouds can either be transferred to an AD system or ADAS, for example, as two point clouds or as the merged point cloud. The two different point clouds are taken as close in time as possible and as close in direction as possible, which enables a merged point cloud with high data quality.

Objects 18, 19 that are detected by both the first operating mode and the second operating mode at the same distance and with reasonable signal ratios can be used with an even higher confidence value.

Furthermore, in this case, interference from another lidar can be ruled out, since two detected reflections 17 with equal time separation and reasonable amplitude ratio lead to high confidence. If an object 18, 19 leads to detected reflections 17 in the first and second operating mode and the signals on the detector 13 are not saturated, the ratio can be precisely calculated and used to suppress false positives and to estimate the reflectivity of the object 18, 19. If a detected reflection 17 saturates a detector 13, for example in the second operating mode, both signals or data points can still be compared to obtain a higher confidence value, but the saturated signal will provide less information. Adding to this, it is possible to check for false positives. When the signal of the second operating mode is saturated, the signal of the first operating mode having a low gain is likely to be above a certain threshold. For example, if the second peak 21 of the signal in Figure 3 is present but said second peak 21 of the signal is not present in the example of Figure 4 that signal of the second peak 21 is likely from an interfering light source and should be disregarded.

Figure 6 shows another embodiment where the lidar system 10 is adapted to operate with four different operating modes. The lidar system 10 has a sensitivity in the third and fourth operating mode which is in-between the sensitivity of the first and second operating mode. The sensitivity can be set on the basis of the gain settings of the detector 13 and the power setting of the laser source 11. Thereby, the dynamic range of the lidar system 10 is similar to a lidar system 10 with two operating modes, but additional operating modes designed in between the first and the second operating mode delimit false positive data point due to interference with other lidar pulses, for example.

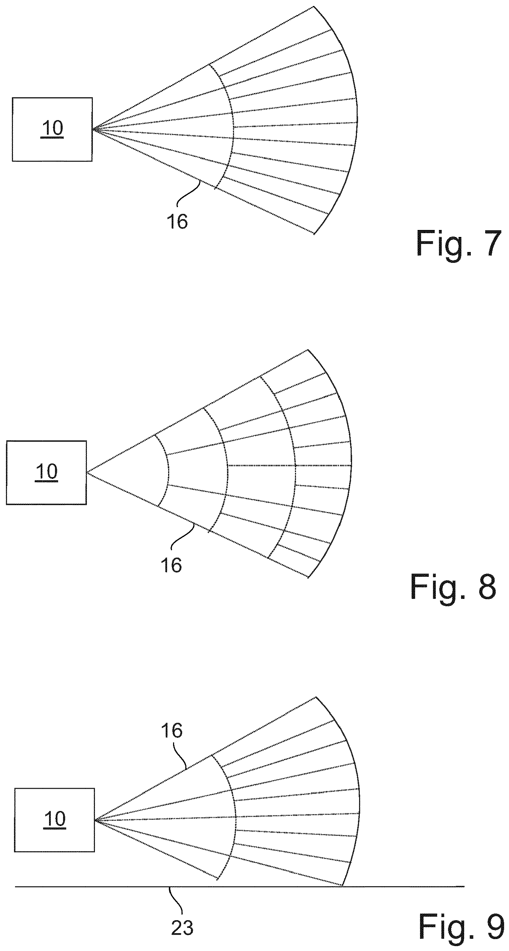

Figure 7 illustrates another advantageous embodiment, wherein the first and the second operating mode are performed in a predefined time period, but wherein the first operating mode is performed with a lower spatial resolution in the field of view 16. As the first operating mode is optimized for a shorter range, it is not necessary to do those measurements as often as the measurements with the second operating mode, which is optimized for a longer range, and still capture a minimum number of points on an object 18 or target of a specific size.

The spatial resolution and the number of measurements with the first operating mode can be reduced compared to the second operating mode. The possible reduction is dependent on the distance where the second operating mode starts to saturate the detector 13, and the expected overlap of the first and second operating mode in order to suppress false positive data points. The measurements with the second operating mode can be performed three times more often than the measurements with the first operating mode, for example. This way processing power and electrical power can be saved. The respective point clouds can then be merged accordingly, i.e., a measurement with the first operating mode is merged with three measurements with the second operating mode.

Said reduction of the measurement in the first operating mode with less sensitivity is also possible with additionally operating modes, e.g., a third and fourth operating mode, between the first and the second operating mode as illustrated in Fig- ure 8. The spatial resolution in the first mode which is in particular suited for close and bright objects 18 is very low, wherein preferably the third and fourth operating mode are operated with a higher spatial resolution and the second operating mode has the highest spatial resolution. The very low resolution of the first operating is in particular useful for blockage detection. The resolution is then increased as the maximum range for the operating modes increases.

In Figure 9 another embodiment is shown, wherein the mounting position of the lidar system 10 in the vehicle is known with respect to the ground 23. Since the maximum needed range is limited by the ground 23 in respective directions in the field of view 16, in those regions the field of view, number of measurement or the spatial resolution with operating modes with higher sensitivity or larger range, like the second operating mode, can be reduced.

## Claims

1. A lidar system (10) comprising:
- at least one laser source (11) configured to emit laser pulses (15) and to direct said laser pulses (15) in a field of view (16);
- at least one detector (13) configured to detect reflections (17) of said laser pulses (15), and
- a control unit (14) configured to perform time-of-flight measurements on said laser pulses (15) and the detected reflections (17), **characterized in that**
- the control unit (14) is configured to control the power of the laser pulses (15) of the at least one laser source (11) and/or the sensitivity of the at least one detector (13), wherein
- the control unit (14) is configured to control the at least one laser source (11) and/or the at least one detector (13) to perform measurements with at least two different operating modes, wherein
- in a first operating mode the at least one detector (13) has a predefined sensitivity and/or the at least one laser source (11) is set to a predefined power of the laser pulses (15), wherein
- in a second operating mode the at least one detector (13) has a higher sensitivity and/or the at least one laser source (11) is set to higher power of the laser pulses (15) than in the first operating mode, wherein
- said measurements with different operating modes are performed in a predefined time period.

2. Lidar system (10) according to claim 1, wherein
the given time period is shorter than 1 s, preferably shorter than 0.5 s, further preferably shorter than 0.2 s.

3. Lidar system (10) according to claim 1 or 2, wherein
- the first operating mode is adapted to detect highly reflective objects (18) at a minimum distance, wherein preferably the first operating mode is adapted to detect highly reflective objects (18) at a minimum distance at or above a saturation threshold of the at least one detector (13).

4. Lidar system (10) according to any one of the preceding claims, wherein
- the second operating mode is adapted to detect low reflective objects (19) at a maximum distance.

5. Lidar system (10) according to any one of the preceding claims, wherein
- the second operating mode is adapted to detect low reflective objects (19) at a maximum distance at a detection limit of the at least one detector (13).

6. Lidar system (10) according to any one of the preceding claims, wherein one or more of:
- the highly reflective object (18) is a white object;
- the highly reflective object (18) has a reflectance R higher than 90%;
- the low reflective object (19) is a dark object;
- the low reflective object (19) has reflectance R lower than 20%.

7. Lidar system (10) according to any one of the preceding claims, wherein
- the control unit (14) is configured to perform measurements at at least one vector in the field of view (16) with at least two different operating modes, preferably the first operating mode and the second operating mode.

8. Lidar system (10) according to any one of the preceding claims, wherein
- the control unit (14) is configured to perform measurements of the complete field of view (16) with the first operating mode and with the second operating mode.

9. Lidar system (10) according to any one of the preceding claims, wherein
- the control unit (14) is configured to perform measurements with the second operating mode at a higher repetition rate than with the first operating mode.

10. Lidar system (10) according to any one of the preceding claims, wherein
- the control unit (14) is configured to perform measurements with the second operating mode with a higher spatial resolution than with the first operating mode.

11. Method to operate a lidar system (10), wherein the lidar system (10) comprises
- at least one laser source (11) emitting laser pulses (15) and directing said laser pulses (15) in a field of view (16);
- at least one detector (13) detecting reflections (17) of said laser pulses (15), and
- a control unit (14) performing time-of-flight measurements on said laser pulses (15) and the detected reflections (17), **characterized in that**
- the control unit (14) controls the power of the laser pulses (15) of the at least one laser source (11) and/or the sensitivity of the at least one detector (13), wherein
- the control unit (14) controls the at least one laser source (11) and/or the at least one detector (13) to perform measurements with at least two different operating modes, wherein
- in a first operating mode the at least one detector (13) has a predefined sensitivity and/or the at least one laser source (11) is set to a predefined power of the laser pulses (15), wherein
- in a second operating mode the at least one detector (13) has a higher sensitivity and/or the at least one laser source (11) is set to higher power of the laser pulses (15) than in the first operating mode, wherein
- said measurements with different operating modes are performed in a predefined time period.

12. Method according to claim 11, wherein
- the lidar system (10) generates at least two different point clouds corresponding to the at least two different operating modes.

13. Method according to claim 11 or 12, wherein
- the lidar system (10) is configured to generate a merged point cloud, which is merged from said at least two different point clouds.

14. Method according to any one of claims 11 to 13, wherein
- when the same object (18, 19) is detected in the first operating mode and the second operating mode and the time intervals of the laser pulses (15) in the different operating modes und the time intervals of the received signals at the detector (13) are in accordance, a confidence value for a respective data point is set higher.

15. Method according to any one of claims 11 to 14, wherein
- when an object (18, 19) is detected in the first operating mode and in the second operating mode and the at least one detector (13) does not saturate in all the operating modes, then the ratio is calculated by the control unit (14).
